# FASCICULE DE BREVET EUROPEEN

(11) **EP 3 137 582 B1**
(45) Date de publication et mention de la délivrance du brevet: **15.04.2020**
(21) Numéro de dépôt: 15716828.7
(22) Date de dépôt: 20.04.2015
(51) Int. Cl.: C10G 45/58, C10L 1/06, C10G 7/00, B01D 3/00, B01D 3/14, B01D 3/32, B01D 5/00

(54) **PROCEDE D'ISOMERISATION D'UN NAPHTA COMPRENANT DEUX ETAPES INTEGREES THERMIQUEMENT**
VERFAHREN ZUR NAPHTHA-ISOMERISIERUNG MIT ZWEI THERMISCH INTEGRIERTEN SCHRITTEN
NAPHTHA ISOMERIZATION PROCESS COMPRISING TWO THERMALLY INTEGRATED STEPS

(30) Priorité: 29.04.2014 FR 1453842
(43) Date de publication de la demande: 08.03.2017
(73) Titulaire: AXENS, 92508 Rueil-Malmaison Cedex (FR)
(72) Inventeur: PREVOST, Isabelle, F-92500 Rueil Malmaison (FR); WATRIPONT, Laurent, F-92500 Rueil-Malmaison (FR); MARTIN, Pierre-Yves, F-92500 Rueil-Malmaison (FR); PIGOURIER, Jérôme, F-92190 Meudon (FR)
(74) Mandataire: IFP Energies nouvelles
(86) Numéro de dépôt international: PCT/EP2015/058499
(87) Numéro de publication internationale: WO 2015/165764

(56) Documents cités:
- FR-A1- 2 413 347
- US-A- 3 131 235
- H-C Cheng; W.L. Luyben: "Heat-Integrated Distillation column for Ternary Separations", Ind. Eng. Chem. Process Des. Dev, 1 juillet 1985 (1985-07-01), pages 707-713, XP055140707, Extrait de l'Internet: URL:http://pubs.acs.org/doi/pdf/10.1021/i2 00030a031 [extrait le 2014-09-16]
- BODO LINNHOFF ET AL: "Heat integration of distillation columns into overall processes", CHEMICAL ENGINEERING SCIENCE, vol. 38, no. 8, 1 août 1983 (1983-08-01), pages 1175-1188, XP055140147, ISSN: 0009-2509, DOI: 10.1016/0009-2509(83)80039-6
- BODO LINNHOFF: "Use pinch analysis to knock down capital costs and emissions", CHEMICAL ENGINEERING PROGRESS, AMERICAN INSTITUTE OF CHEMICAL ENGINEERS, NEW YORK, NY, US, 1 août 1994 (1994-08-01), pages 32-57, XP002384825, ISSN: 0360-7275

## Description

### DOMAINE DE L'INVENTION

L'invention concerne le domaine de la production d'essence à haut indice d'octane. Les naphtas issus de la distillation atmosphérique du pétrole sont habituellement principalement constitués d'hydrocarbures comprenant de 5 à 10 atomes de carbone (coupes C5-C10). Ces naphtas sont généralement fractionnés en une coupe naphta léger (coupe C5-C6) et une coupe naphta lourd (C7-C10). La coupe naphta lourd est habituellement envoyée dans un procédé de reformage catalytique qui produit un reformat.

La coupe naphta léger comprend essentiellement des hydrocarbures à 5 ou 6 atomes de carbones (C5 et C6) mais peut comprendre en sus des hydrocarbures à 4 ou 7 voire 8 atomes de carbones (C4,C7,C8). Cette coupe est généralement isomérisée dans une unité d'isomérisation afin d'augmenter la proportion d'hydrocarbures ramifiés qui présentent un indice d'octane plus élevé que les hydrocarbures linéaires.

L'isomérat et le reformat obtenus sont ensuite envoyés au pool essence avec d'autres bases ou additifs (essence de craquage catalytique, alkylats, etc...).

Compte tenu de la diminution progressive de la teneur maximale en composés aromatiques autorisée dans les essences (moins de 35% volume d'aromatiques et moins de 1% volume de benzène dans l'U.E.), et des teneurs en aromatiques importantes des essences de reformage catalytique, les isomérats qui ne contiennent pas de composés aromatiques, prennent une importance croissante dans le pool essence.

Il est donc important de disposer de procédés d'isomérisation performants, tant en terme de rendement que d'indice d'octane. Ces procédés doivent également être économiquement intéressants aussi bien en niveau d'investissement qu'en coûts opératoires. Il est donc important d'optimiser le fonctionnement de la section réactionnelle d'isomérisation et des sections de fractionnement de la charge ou de l'effluent.

### EXAMEN DE L'ART ANTERIEUR

Le brevet FR 2 828 205 décrit un procédé d'isomérisation d'une coupe C5-C8 dans lequel ladite coupe est fractionnée en une coupe C5-C6 et une coupe C7-C8 qui sont chacune isomérisées séparément dans des conditions spécifiques à chaque coupe.

Le brevet US 2,905,619 décrit un procédé d'isomérisation dans lequel la coupe C5-C6 issue d'une coupe essence est séparée en différentes fractions qui sont isomérisées dans deux sections d'isomérisation opérées dans des conditions spécifiques.

Le brevet US 7,233,898 décrit un procédé d'isomérisation ne comprenant dans la section de fractionnement qu'une stabilisation ou stripage et un dé-isohéxaniseur produisant 2 à 4 coupes différentes.

Le brevets GB 1,056,617 décrit un procédé d'isomérisation d'une coupe C5-C6 comprenant un dé-isopentaniseur (noté DiP), une isomérisation de la coupe appauvrie en isopentane (ISOM), une séparation de l'effluent isomérisé permettant de récupérer le n-pentane (DP) qui est recyclé avec la charge à l'entrée du dé-isopentaniseur, et une séparation des hydrocarbures en C6 ramifiés (dé-isohexaniseur,) (notéDiH) permettant de récupérer des hydrocarbures en C6 ramifiés à haut indice d'octane, le complément étant recyclé au réacteur d'isomérisation.

US 3,131,235 décrit un procédé de production d'une coupe essence à haut indice d'octane a partir d'une charge naphta léger.

FR2,413,347 divulgue un procédé pour économiser de l'énergie et de la chaleur dans une séparation d'un mélange d'hydrocarbures par distillation.

### DESCRIPTION SOMMAIRE DES FIGURES

La figure 1 représente le schéma selon l'art antérieur dans lequel on trouve les équipements principaux : la colonne du dé-isopentaniseur [2], la colonne du dé-isohexaniseur [12], l'unité d'isomérisation [1], et la colonne de stabilisation [7] des effluents de l'isomérisation.
La figure 2 représente le schéma du procédé selon la présente invention dans une première variante dans laquelle on trouve en plus des équipements de l'art antérieur l'échangeur [13] qui permet de récupérer les calories du condenseur de la colonne [12] pour les transférer au rebouilleur de la colonne [2].
La figure 3 représente une seconde variante du procédé selon l'invention dans laquelle l'effluent de tête de la colonne [12] est comprimé au moyen du compresseur [18] de façon à pouvoir condenser ces vapeurs de tête dans le rebouilleur [13] du dé-isopentaniseur [2].

Les équipements du schéma selon l'art antérieur qui se retrouvent dans le schéma selon la présente invention conservent le même numéro mis entre crochets. Les numéros de flux et ceux des lignes qui les transportent sont les mêmes (mis entre parenthèses).

### DESCRIPTION SOMMAIRE DE L'INVENTION

Le procédé selon la présente invention peut être décrit comme un procédé de production d'une coupe essence à haut indice d'octane à partir d'une charge naphta léger comportant la suite d'étapes suivantes :
a)-une première étape de séparation par distillation qui permet de séparer des hydrocarbures à 5 atomes de carbone des composés plus lourds (soit iC5 soit iC5+nC5 selon les cas).
b)-une section d'isomérisation catalytique [1], suivie d'une stabilisation [7] de l'effluent isomérisé qui consiste à séparer les composés plus légers que les pentanes dans une colonne de stabilisation [7],
c)-une deuxième étape de séparation par distillation réalisée au moyen d'un dé-isohexaniseur [12] consistant en une colonne de séparation dont les produits de tête (106) et de fond (107) sont les produits recherchés du procédé, et dont une coupe intermédiaire enrichie en n-hexane, prélevée en soutirage latéral (108), est recyclée à la section réactionnelle [1],
d)-une étape de transfert de chaleur entre les 2 étapes de séparation réalisée au moyen d'un échangeur [13] permettant de condenser tout ou partie des vapeurs de tête de dé-isohexaniseur [12] en rebouillant, tout ou partie du fond de la colonne du dé-isopentaniseur [2], en choisissant une pression opératoire du condenseur du dé-isohexaniseur [12] suffisamment élevée pour permettre cette échange.

De préférence, la présente invention combine l'intégration thermique de l'étape d) avec un moyen permettant de maintenir le niveau de température de la majorité de l'énergie requise au dé-isohexaniseur [12] à un niveau équivalent à celui qu'il serait sans intégration thermique, c'est-à-dire avec une pression de condensation du condenseur du DIH plus basse, généralement choisie le plus bas possible, tout en pouvant condenser avec les utilités froides disponibles.

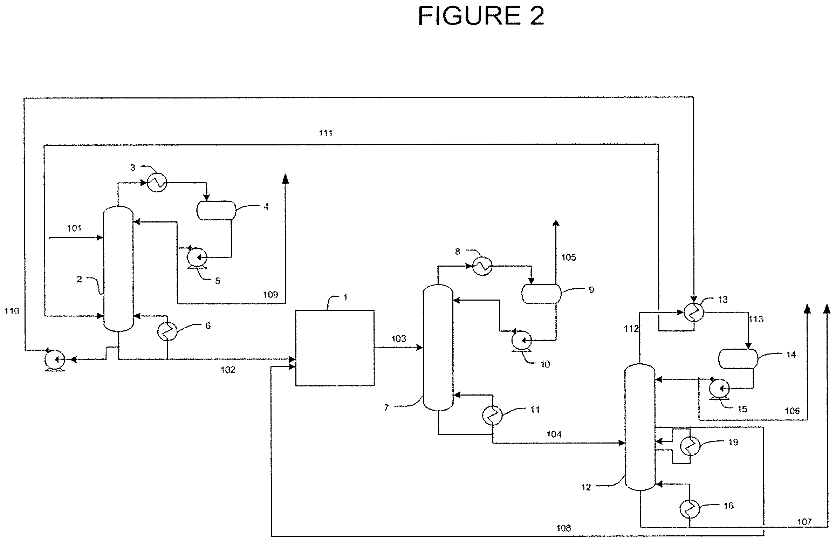

De façon plus précise, la présente invention de décline donc sous deux variantes :
- Une première variante (correspondant à la figure 2) dans laquelle la pression opératoire du dé-isohexaniseur [12] est comprise entre 4 et 20 bars absolus, de préférence entre 5 et 13 bar absolus, et de manière plus préférée entre 7 et 10 bar absolus, de façon à permettre l'échange thermique avec le rebouilleur [6] du dé-isopentaniseur [2] qui est opéré à une température comprise entre 80°C et 100°C, de préférence entre 85°C et 95°C.

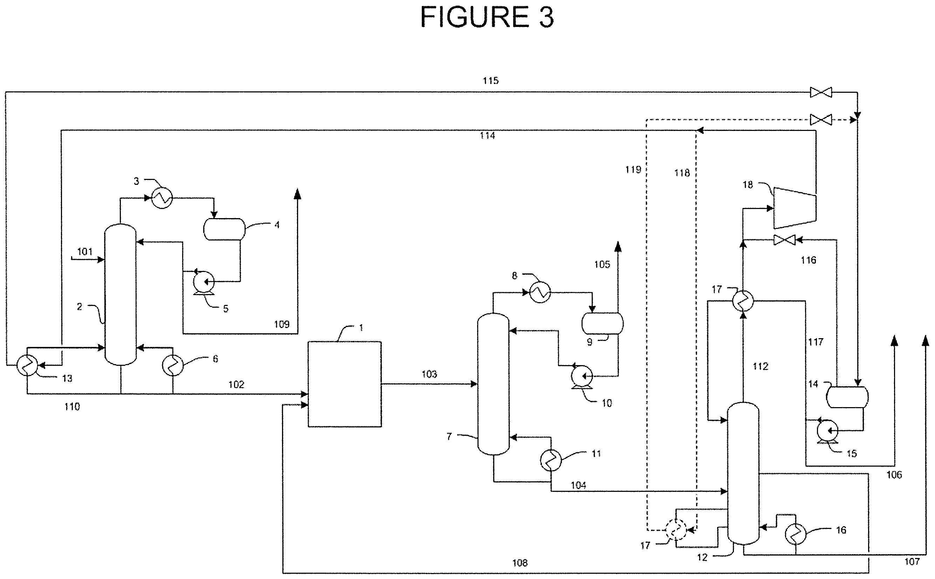

Dans cette variante du procédé selon l'invention, un rebouilleur latéral [19] est implanté en aval du rebouilleur de fond [16] du dé-isohexaniseur [12], la quantité de chaleur apportée par le rebouilleur latéral [19] étant au moins 50% de la quantité totale de chaleur requise.
Le rebouilleur latéral [19] est préférentiellement implanté sur le dé-isohexaniseur [12] à un niveau situé entre 10 et 15 plateaux au-dessus du rebouilleur [16], de façon à maintenir la température opératoire de ce rebouilleur latéral [19] inférieure à 180°C, et de préférence inférieure à 160°C.
- Une seconde variante (correspondant à la figure 3) dans laquelle la pression opératoire du dé-isohexaniseur [12] est inférieure ou égale à 3 bars absolus, de préférence inférieure à 2 bars absolus, de façon à permettre l'échange thermique avec le rebouilleur du dé-isopentaniseur [2] opéré à une température comprise entre 80°C et 100°C, de préférence entre 85°C et 95°C.

Selon cette seconde variante, le circuit des vapeurs de tête du dé-isohexaniseur [12] est le suivant :
Les vapeurs de tête du dé-isohexaniseur [12] collectées par la conduite (112) sont comprimées par le compresseur [18], préférentiellement de type centrifuge, à une pression choisie de façon à pouvoir condenser lesdites vapeurs de tête dans l'échangeur [13] du dé-isopentaniseur [2].
Lesdites vapeurs comprimées sont amenées par la conduite (114) dans l'échangeur [13] où elles se condensent par échange thermique avec le liquide froid provenant du fond du dé-isopentaniseur [2] par la conduite 110. Le liquide sous pression (115) issu de l'échangeur [13] est envoyé par la conduite (115) au ballon de reflux [14] opéré une pression supérieure ou égale à celle du dé-isohexaniseur [12].

Toujours selon la seconde variante du procédé selon l'invention, les vapeurs de tête du dé-isohexaniseur [12] collectées par la conduite (112) sont préférentiellement surchauffées dans l'échangeur [17] au contact du reflux chaud (117) provenant du ballon de reflux [14], le compresseur [18] étant de type centrifuge, et lesdites vapeurs comprimées étant amenées par la conduite (114) dans la calandre de l'échangeur [13] où elles se condensent au contact des tubes verticaux à l'intérieur desquels circule le liquide froid (110).

Enfin dans le cadre de la seconde variante du procédé selon l'invention, une faible fraction du liquide sous pression (115) résultant de la condensation réalisée à l'échangeur [13], peut se vaporiser par détente dans le ballon de reflux [14], les vapeurs issues du ballon de reflux [14] étant renvoyées par la conduite (116) à l'aspiration du compresseur [18] et le liquide du ballon de reflux [14] étant pompé par la pompe de reflux [15] et divisé en un distillat évacué par la conduite (106), et un reflux renvoyé vers le dé-isohexaniseur [12] par la conduite (117) après refroidissement dans l'échangeur [17].

### DESCRIPTION DETAILLEE DE L'INVENTION

Le procédé selon la présente invention traite une charge de type naphta léger et préférentiellement une coupe C5-C6 (coupe d'hydrocarbures comprenant 5 ou 6 atomes de carbone), et vise à maximiser les molécules ramifiées par rapport aux molécules linéaires (ou normales). Toutefois, ces charges peuvent éventuellement comprendre d'autres hydrocarbures, par exemple des hydrocarbures comprenant 4 ou 7, voire 8 atomes de carbone (coupes C4, C7,C8). On cherchera toutefois de préférence à limiter la quantité de ces hydrocarbures, via par exemple une séparation préalable. En ce qui concerne les hydrocarbures en C4, ils peuvent aussi être en grande partie séparés dans la colonne de stabilisation [7].

L'invention s'applique donc à un procédé d'isomérisation d'une charge généralement constituée par une coupe naphta léger, de préférence une coupe C5-C6 pouvant éventuellement contenir des hydrocarbures plus lourds, dans lequel l'isomérat est obtenu par une conversion poussée des composés à faible indices d'octane de la coupe C6. Ce procédé requiert la mise en œuvre d'une section réactionnelle et de deux étapes de séparation.
- La section réactionnelle [1] est constituée principalement d'un réacteur suivi d'une colonne de stabilisation [7] des effluents pour séparer les composés plus légers que les pentanes,
- La première étape de séparation permet de séparer des hydrocarbures à 5 atomes de carbone des composés plus lourds, pour produire une coupe C5 à haut indice d'octane qui sera un produit de l'unité. Selon la quantité d'ic5 de la charge, cette section est placée en amont ou en aval de la section réactionnelle [1], et les composés plus lourds sont envoyés respectivement soit à la section réactionnelle ou à la deuxième section de séparation. Cette première étape de séparation est constituée principalement d'un dé-isopentaniseur [2] (DiP) ou d'un dé-pentaniseur (DP) ou des 2 colonnes (dé-isopentaniseur [2] (DiP) et dé-pentaniseur (DP)).
- La deuxième étape de séparation permet de fractionner l'isomérat en une coupe enrichie en n-hexane recyclée à la section réactionnelle, et en deux coupes riches en composés à haut indice d'octane qui sont les produits de l'unité. Elle est constituée principalement d'un dé-isohexaniseur [12] (DiH). La coupe enrichie en n-hexane est prélevée en soutirage latéral, les coupes riches en composés à haut indice d'octane sont les produits de tête et de fond de la colonne [12] qui est placée en aval de la section réactionnelle [1].

Dans les figures 2 et 3 selon l'invention, la première étape de séparation est placée en amont de la section réactionnelle [1], cette dernière ne comportant qu'une colonne de dé-isopentaniseur [2] (DiP).

Dans le procédé selon l'invention, les deux étapes de séparation sont intégrées thermiquement. L'objet de l'invention est de modifier les conditions opératoires de la deuxième étape de séparation (DiH) de façon à transformer au moins une partie de la chaleur disponible à basse température et dissipée à l'atmosphère, en une chaleur disponible à plus haute température, se substituant ainsi à une consommation d'utilités chaudes dans la première étape de séparation.

Pour ce faire, les vapeurs de tête du dé-isohexaniseur [12] sont condensées à une pression plus élevée que le nécessite les utilités froides disponibles. L'augmentation de pression est choisie de façon à ce que la température de cette condensation soit supérieure à la température de rebouillage du dé-iso pentaniseur [2], autorisant ainsi un échange de chaleur direct. Typiquement les écarts de température entre la condensation des vapeurs de tête du dé-isohexaniseur [12] et la vaporisation du liquide de fond de la colonne du dé-isopentaniseur [2] sont situés dans l'intervalle de 5 à 15 °C.

L'invention consiste, de préférence, à combiner, cette intégration thermique avec un moyen permettant de maintenir le niveau de température de la majorité de l'énergie requise au dé-isohexaniseur [12] à un niveau équivalent à celui qu'il serait sans intégration thermique, c'est-à-dire à pression de condensation du condenseur du DIH plus basse. Ceci afin que les gains d'énergie obtenus par l'intégration thermique ne soient pas contrebalancés par un coût supplémentaire des utilités, désormais plus chaudes, requises au rebouilleur du dé-isohexaniseur [12].

Plus précisément, le procédé selon l'invention permet un transfert de chaleur entre les deux étapes de séparation organisé de manière à réduire à la fois la consommation d'utilité chaude de la première étape de séparation et d'utilités froides de la deuxième étape de séparation, sans augmenter significativement la consommation et le niveau de température des utilités chaudes de ladite première étape.

La mise en œuvre de l'invention dans le cas particulier où la première étape est constituée par un dé-isopentaniseur [2], et la deuxième étape constituée par un dé-isohexaniseur [12] permet d'économiser d'une part des utilités froides en tête de dé-isohexaniseur [12], et des utilités chaudes au rebouilleur du dé-isopentaniseur [2].

Le procédé selon l'invention permet ainsi de réduire de 20%, préférentiellement de 30%, l'ensemble de la consommation énergétique du système constitué par les deux étapes de séparation.

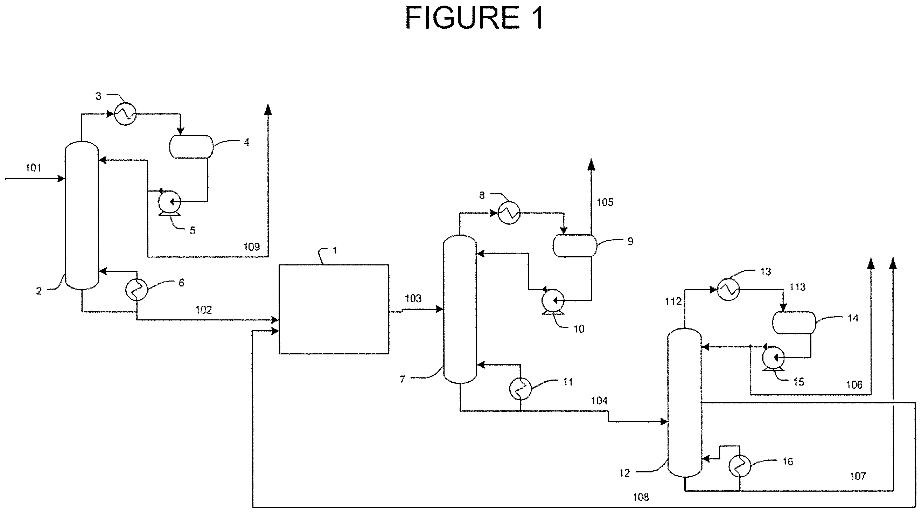

Dans la figure 1 selon l'art antérieur, la charge est amenée à un dé-isopentaniseur [2] par la conduite (101). Le dé-isopentaniseur [2] produit un flux (109), enrichi en iso-pentane après passage dans l'échangeur [3], le ballon de reflux [4] et la pompe de reflux [5].

La charge appauvrie en iso-pentane est amenée à la section réactionnelle d'isomérisation [1] par la conduite (102).

Les conditions opératoires de cette section réactionnelle [1] sont choisies de façon à favoriser la transformation des n-paraffines de faible indice d'octane (n-pentane, n-hexane) vers des iso-paraffines d'indice d'octane plus élevé (isopentane, 2,2-diméthylbutane, 2,3-diméthylbutane, 2-méthylpentane, 3-méthylpentane).

L'effluent (103) de la section de réaction d'isomérisation [1], une fois stabilisé par séparation des composés légers dans la colonne de stabilisation [7] est ensuite dirigé via la conduite (104) vers un dé-isohexaniseur [12].

Les produits de tête (106) et de fond (107) du dé-isohexaniseur [12] présentant un indice d'octane supérieur à celui de la charge, sont les produits du procédé.

Le flux (107) comprend essentiellement des hydrocarbures comprenant 7 atomes de carbone ou plus (C7+), du cyclohexane et éventuellement, un peu d'hexane, de methyl-cyclopentane, de methylpentanes et de dimethylbutanes.

Le flux (106) comprend généralement essentiellement les dimethylbutanes, les pentanes, des methylpentanes et du cyclopentane. Une coupe intermédiaire enrichie en n-hexane est soutirée latéralement du de-isohexaniseur [12], et recyclée à la section de réaction d'isomérisation [1] via la conduite (108).

Dans sa forme la plus générale, le procédé selon l'invention comprend :
a) une première étape de séparation par distillation de la charge qui permet de séparer des hydrocarbures à 5 atomes de carbone des composés plus lourds (soit iC5, soit iC5+nC5 selon les cas).
b) une section d'isomérisation catalytique [1], suivie d'une stabilisation [7] de l'effluent isomérisé qui consiste à séparer en tête les composés plus légers que les pentanes, et à récupérer en fond un effluent qui est envoyé à la seconde étape de séparation,
c) une deuxième étape de séparation par distillation réalisée au moyen d'un dé-isohexaniseur [12] consistant en une colonne de séparation dont les produits de tête (106) et de fond (107) sont les produits du procédé, et dont une coupe intermédiaire enrichie en n-hexane, prélevée en soutirage latéral (108) est recyclée à la section réactionnelle [1].
d) une étape de transfert de chaleur entre les 2 étapes de séparation réalisée au moyen d'un échangeur [13] permettant de condenser tout ou partie des vapeurs de tête de dé-isohexaniseur [12] en rebouillant, tout ou partie du fond de la colonne du dé-isopentaniseur [2], en choisissant une pression opératoire du condenseur du dé-isohexaniseur [12] suffisamment élevée pour permettre cet échange.

De préférence, l'intégration thermique de l'étape d) peut être réalisée avec un moyen permettant de maintenir le niveau de température de la majorité de l'énergie requise au dé-isohexaniseur [12] à un niveau équivalent à celui qu'il serait sans intégration thermique, c'est-à-dire avec une pression de condensation du condenseur du DIH plus basse.

La présente invention réalise le transfert thermique de l'étape d) selon deux modalités,
- soit en augmentant la pression opératoire du dé-isohexaniseur [12], ce qui a pour conséquence la mise en place d'un rebouilleur latéral [19] qui apporte la majorité des calories à un niveau de température sensiblement proche de celui du rebouilleur de fond de la dite colonne [12] lorsque sa pression opératoire est choisie au niveau le plus bas permis par les utilités froides disponibles,
- soit en maintenant la pression opératoire du dé-isohexaniseur [12] au niveau le plus bas permis par les utilités froides disponibles, voire au-dessous de ce niveau, ce qui amène à comprimer les vapeurs de tête du dé-isohexaniseur [12] dans un compresseur [18] de manière à se retrouver dans des conditions de pression et température dans l'échangeur [13] qui permettent d'assurer le besoin thermique du rebouilleur du dé-isopentaniseur [2] avec une bonne efficacité.

Les catalyseurs d'isomérisation du procédé selon l'invention peuvent être préférentiellement compris dans le groupe constitué par :
- les catalyseurs supportés, le plus souvent par un support minéral, typiquement un oxyde (par exemple un oxyde d'aluminium ou de silicium ou leur mélange), et contenant au moins un halogène et un métal du groupe VIII.
- les catalyseurs zéolitiques contenant au moins un métal du groupe VIII
- les catalyseurs de type Friedel et Krafts,
- les catalyseurs acides ou super acides, par exemple de type hétéropolyanions (HPA) sur zircone, les oxydes de tungstène sur zircone, les zircones sulfatées.

La réaction d'isomérisation est de préférence opérée en présence d'un catalyseur à haute activité, comme par exemple un catalyseur à base d'alumine chlorée et de platine, fonctionnant à basse température, par exemple entre 100 et 300°C, de préférence entre 110 et 240 °C, à haute pression, par exemple comprise entre 2 et 35 bars (1bar = 0,1MPa), et avec un faible rapport molaire hydrogène/hydrocarbures, compris par exemple entre 0,1/1 et 1/1.

Des catalyseurs préférentiellement utilisables sont constitués d'un support en alumine de haute pureté renfermant de préférence 2 à 10 % en poids de chlore, de 0,1 à 0,40 % en poids de platine et éventuellement d'autres métaux.

Ils peuvent être mis en œuvre avec une vitesse spatiale comprise entre 0,5 et 10 h-1, de préférence comprise entre 1 à 4 h-1.

Le maintien du taux de chloration du catalyseur nécessite généralement l'appoint en continu d'un composé chloré comme le tétrachlorure de carbone injecté en mélange avec la charge à une concentration de préférence comprise entre 50 et 600 parties par million en poids.

D'autres catalyseurs présentant une acidité comparable à ces catalyseurs peuvent également être utilisés.

Une première variante du procédé selon l'invention (représenté à la figure 2) consiste à augmenter le niveau de pression du dé-isohexaniseur de façon à pouvoir condenser les vapeurs de tête dans le rebouilleur [13] du dé-isopentaniseur [2].

L'échangeur [13] joue le rôle de rebouilleur vis-à-vis du liquide de fond du dé-isopentaniseur [2] et de condenseur vis-à-vis des vapeurs de tête du dé-isohexaniseur [12].

La pression opératoire de condensation du dé-isohexaniseur [12], typiquement opéré à une pression de 2,5 bar absolus dans l'art antérieur, est comprise selon l'invention entre 4 et 20 bars absolus, de préférence entre 5 et 13 bar absolus, et de manière plus préférée entre 7 et 10 bar absolus, de façon à permettre l'échange thermique avec le rebouilleur du dé-isopentaniseur [2] opéré généralement à une température comprise entre 80°C et 100°C, de préférence entre 85°C et 95°C.

Le liquide du fond du dé-isopentaniseur [2] est pompé via la pompe [20], et envoyé par la conduite (110) dans l'échangeur [13] situé au-dessus du ballon de reflux [14]. Cet échangeur [13] fonctionne préférentiellement en circulation forcée.

En sortie, coté rebouilleur, le liquide peut être partiellement vaporisé avant de retourner dans la colonne [2] par la conduite (111). Les vapeurs chaudes de tête du dé-isohexaniseur [12] alimentées par la conduite (112) se condensent au contact du liquide froid provenant du dé-isopentaniseur [2] dans l'échangeur [13] et sont recueillies sous contrôle de niveau par la conduite (113) alimentant le ballon de reflux [14].

Cet arrangement permet de minimiser la différence de pression entre le de-isohexaniseur [12] et son ballon de reflux [14]. On peut en effet contrôler la quantité d'énergie de condensation en faisant varier la surface d'échange de l'échangeur [13].

Cette différence de pression est ainsi inférieure à 0,5 bar, et généralement comprise entre 0,2 bar et 0,5 bar, ce qui minimise la pression opératoire de la colonne [12] à iso température de condensation des vapeurs.

Par ailleurs, le rebouilleur indépendant [6] du dé-isopentaniseur [2], permet d'amortir les fluctuations de la puissance du rebouilleur condenseur [13] et de contrôler les 2 colonnes indépendamment.

Un rebouilleur latéral [19] est implanté sur le dé-isohexaniseur [12] en étant situé un certain nombre de plateaux au-dessus du rebouilleur [16], de façon à maintenir la température opératoire de ce rebouilleur latéral [19] inférieure à 180°C, et de préférence inférieure à 160°C. Ce nombre de plateaux est généralement compris entre 10 et 15. Les rebouilleurs [19] et [16] sont préférentiellement des thermosiphons fonctionnant par circulation naturelle.

Les températures du rebouilleur latéral [19] sont typiquement compatibles avec le réseau de vapeur moyenne pression d'une raffinerie sans nécessiter l'utilisation de vapeur haute pression.

La puissance de rebouillage requise à une température supérieure à 180°C au rebouilleur [16] de la colonne [12], représente typiquement moins de 50%, et de préférence moins de 20% de la puissance totale de rebouillage requise par la colonne [12].

La deuxième variante du procédé selon l'invention (représenté par la figure 3) consiste à n'augmenter que la pression opératoire du condenseur [13] du dé-isohexaniseur [12] tout en maintenant la pression opératoire du dé-isohexaniseur [12], voire en la diminuant.

Les vapeurs de tête du dé-isohexaniseur [12] collectées par la conduite (112) sont surchauffées dans l'échangeur [17] au contact du reflux chaud (117) provenant du ballon de reflux [14], puis comprimées par le compresseur [18], typiquement de type centrifuge, à une pression choisie de façon à pouvoir condenser ces vapeurs de tête dans l'échangeur [13] du dé-isopentaniseur [2]. Cet échangeur [13] joue exactement le même rôle que dans la variante 1.

Les vapeurs de tête (112) comprimées après passage dans le compresseur [18] sont amenées par la conduite (114) dans la calandre de l'échangeur [13] où elles se condensent au contact des tubes préférentiellement verticaux à l'intérieur desquels circule le liquide froid provenant du fond du dé-isopentaniseur [2] par la conduite (110). Le liquide sous pression est envoyé par la conduite (115) au ballon de reflux [14] opéré à la pression du dé-isohexaniseur [12]. Une faible fraction de ce liquide se vaporise par détente dans le ballon de reflux [14]. Les vapeurs issues du ballon de reflux [14] sont renvoyées par la conduite (116) à l'aspiration du compresseur [18].

Le liquide du ballon de reflux [14] est pompé par la pompe de reflux [15] et divisé en un distillat évacué par la conduite (106) et un reflux renvoyé vers le dé-isohexaniseur [12] par la conduite (117) après refroidissement dans l'échangeur [17].

Ainsi, le niveau thermique requis et la quantité des utilités chaudes du dé-isohexaniseur ne sont pas augmentés par rapport à l'art antérieur.

Le dé-isohexaniseur [12] est opéré à une pression inférieure ou égale à celle de l'art antérieur, en fonction du cout relatif des utilités chaudes et de l'électricité.

La pression opératoire de condensation au refoulement du compresseur [18], est comprise entre 5 et 13 bar absolus, et de préférence entre 7 et 10 bar absolus, de façon à permettre l'échange thermique avec le rebouilleur [13] du dé-isopentaniseur [2] dont la température opératoire est de l'ordre de 90°C.

En fonction du niveau thermique des utilités chaudes disponibles et du coût relatif des utilités, l'homme de l'art pourra aussi associer les variantes 1 et 2, afin de maximiser la profitabilité de l'unité.

### EXEMPLES SELON L'INVENTION

Ces exemples sont basés sur la charge dont la composition est détaillée au Tableau 1 ci-dessous :

**Tableau 1 : composition de la charge**

| | | |
|---|---|---|
| Débit Massique | kg/hr | 52 143 |
| isobutane | %pds | 0,2% |
| n-butane | %pds | 1,0% |
| Isopentane | %pds | 32,4% |
| n-pentane | %pds | 43,0% |
| 2,2-dimethyl-butane | %pds | 2,1% |
| 2,3-dimethyl-butane | %pds | 1,3% |
| 2-methyl-pentane | %pds | 11,4% |
| 2-methyl-hexane | %pds | 2,3% |
| n-hexane | %pds | 2,8% |
| cyclopentane | %pds | 2,7% |
| methyl-cyclopentane | %pds | 0,4% |
| benzène | %pds | 0,4% |
| cyclohexane | %pds | 0,0% |

La section réactionnelle d'isomérisation est constituée de 2 réacteurs en série.

La température d'entrée des 2 réacteurs est de 120°C, La pression d'entrée du réacteur 1 est de 35 bars absolus.

La pression d'entrée du deuxième réacteur est de 33 bars absolus.

Le catalyseur employé est constitué d'un support en alumine □ renfermant 7% en poids de chlore, et 0,23% en poids de platine et éventuellement d'autres métaux.

La vitesse spatiale est de 2.0h⁻¹. Le ratio molaire hydrogène sur hydrocarbure est de 0,1/1.

Le taux de recyclage des hexanes est défini comme le débit du fluide enrichi en n-hexane recyclé à la section de réaction d'isomérisation divisé par le débit de charge fraiche.

Le produit des procédés est défini comme le mélange des produits de tête (106) et en fond (107) du de-isohexaniseur et si applicable le produit de tête du de-isopentaniseur (109) enrichi en isopentane.

Les compositions des produits obtenus en fonction du schéma retenu sont résumées dans les tableaux 2 à 4 qui suivent :

**Tableau 2 : composition du produit issu du flux 106 (tête DiH)**

| | | **Figure 1** **(Art antérieur)** | **Figure 2** **(Invention)** | **Figure 3** **(Invention)** |
|---|---|---|---|---|
| **Débit Massique** | kg/h | 35550 | 35541 | 35555 |
| **Butanes** | %pds | 0,5 | 0,5 | 0,5 |
| **i-Pentane** | %pds | 53,3 | 53,3 | 53,3 |
| **n-Pentane** | %pds | 15,4 | 15,4 | 15,4 |
| **2,2-Dimethylbutane** | %pds | 26,3 | 26,7 | 24,5 |
| **2,3-Dimethylbutane** | %pds | 1,0 | 0,5 | 2,0 |
| **Methyl-pentanes** | %pds | 0,6 | 0,6 | 1,4 |
| **Cyclopentane** | %pds | 2,9 | 2,9 | 2,9 |

**Tableau 3 : composition du produit issu du flux 107 (fond DiH)**

| | | **Figure 1** **(Art antérieur)** | **Figure 2** **(Invention)** | **Figure 3** **(Invention)** |
|---|---|---|---|---|
| **Débit Massique** | kg/h | 236 | 236 | 235 |
| **Dimethylbutanes** | %pds | 0,1 | 0,8 | 0,0 |
| **Methylpentanes** | %pds | 0,9 | 5,3 | 0,6 |
| **n-Hexane** | %pds | 2,0 | 5,2 | 1,9 |
| **Methyl-cyclopentane** | %pds | 0,4 | 0,7 | 0,4 |
| **Cyclohexane** | %pds | 7,6 | 5,3 | 10,1 |
| **C7+** | %pds | 89,1 | 82,7 | 87,0 |

**Tableau 4 : composition du produit issu du flux 109 (tête DiP)**

| | | **Figure 1** | **Figure 2** **(Invention)** | **Figure 3** **(Invention)** |
|---|---|---|---|---|
| **Débit Massique** | kg/h | 15754 | 15754 | 15754 |
| **butanes** | %pds | 3,9 | 3,9 | 3,9 |
| **iso-pentane** | %pds | 91,1 | 91,1 | 91,1 |
| **n-pentane** | %pds | 5,0 | 5,0 | 5,0 |

Le tableau 5 détaille les conditions opératoires des colonnes les diverses variantes de schéma selon l'art antérieur et selon l'invention.

**Tableau 5 : comparaison des différents schémas**

| | **Figure 1** Art antérieur | **Figure 2** Invention | **Figure** 3 Invention |
|---|---|---|---|
| **Colonne de stabilisation** | | | |
| Nombre de plateaux théoriques | 20 | 20 | 20 |
| Pression opératoire (bar abs) | 19 | 19 | 19 |
| Plateau d'alimentation⁽¹⁾ | 8 | 8 | 8 |
| Puissance requise au rebouilleur. (MW) | 4,37 | 4,37 | 4,38 |
| Température de sortie du rebouilleur (°C) | 172 | 172 | 172 |
| Taux de reflux / débit distillat | 4,74 | 4,73 | 4,74 |
| | | | |

| **De-isohexaniseur** | | | |
|---|---|---|---|
| Nombre de plateaux théoriques | 62 | 75 | 62 |
| Pression opératoire (bar abs) | 3 | 9 | 1,5 |
| Plateau d'alimentation⁽¹⁾ | 38 | 38 | 38 |
| Plateau de soutirage latéral⁽¹⁾ | 49 | 64 | 49 |
| Puissance requise au rebouilleur. (MW) | 12,92 | 2,76 | 7,69 |
| Température de sortie du rebouilleur (°C) | 167 | 206 | 136 |
| Puissance requise au rebouilleur latéral. (MW) | N/A | 15,41 | N/A |
| Plateau de rebouillage latéral ⁽¹⁾ | N/A | 62 | N/A |
| Température de sortie du rebouilleur latéral (°C) | N/A | 155 | N/A |
| Taux de reflux / distillat | 4,00 | 6,20 | 3,60 |
| Puissance requise au compresseur (MW) | | | 2,86 |
| | | | |

| **De-isopentaniseur** | | | |
|---|---|---|---|
| Nombre de plateaux théoriques | 52 | 52 | 52 |
| Pression opératoire (bar abs) | 3,71 | 3,71 | 3,71 |
| Plateau d'alimentation⁽¹⁾ | 32 | 32 | 32 |
| Puissance requise au rebouilleur. (MW) | 18,00 | 18,00 | 18,00 |
| Puissance requise au rebouilleur fournie par utilité chaude (MW) | 18,00 | 0,00 | 5,71 |
| Température de sortie du rebouilleur (°C) | 94 | 94 | 94 |
| Taux de reflux / distillat | 11,52 | 11,52 | 11,52 |
| | | | |
| Taux de recyclage des hexanes | 0,42 | 0,42 | 0,42 |

| | | | |
|---|---|---|---|
| *Note 1 : les plateaux d'alimentation et de soutirage sont repérés par leur numéro d'ordre, l'ensemble des plateaux étant numéroté à partir de 1 de haut en bas.* | | | |

Le tableau 6 compare les résultats obtenus avec les différentes variantes.

**Tableau 6 : Résultats**

| | **Figure 1** Art antérieur | **Figure 2** Invention | **Figure 3** Invention |
|---|---|---|---|
| Indices Octane recherches du produit | 89,8 | 89,8 | 89,8 |
| Rendement ⁽¹⁾ | 0,988 | 0,988 | 0,989 |
| Débit massique au réacteur d'isomérisation (kg/h) | 58223 | 58222 | 58223 |
| Puissance totale de rebouillage (MW) | 35,3 | 22,5 | 17,8 |
| Coût opératoires (utilité rebouilleur + électricité compresseur) M$/An ⁽²⁾ | 9,3 | 6,3 | 6,1 |
| Emission de CO2⁽³⁾ kg/h | 14609 | 9539 | 9760 |

| | | | |
|---|---|---|---|
| *Note 1 : Rendement défini comme débit massique de produit divisé par débit de charge fraiche.* *Note 2 : Coût opératoires basés sur les hypothèses suivantes* *- Vapeur moyenne pression : 18$*/*tonne* *- Vapeur haute pression : 25$*/*tonne* - *Electricité : 60$*/*MW* *Note 3* : Facteur d'émission typique des utilités chaudes (source : natural ressource canada : « Benchmarking energy intensity in the canadian steel industry », annexe B). *- Vapeur haute pression : 267 kg CO2* /*t* - *Vapeur moyenne pression : 240 kg CO2* /*t* *- Vapeur basse pression: 224 kg CO2* /*t* - *Electricité : 856 kg*/*MWh* | | | |

Il apparait au regard du tableau 6 que :
- L'indice d'octane du produit est identique pour le procédé selon l'art antérieur et les procédés selon l'invention
- Le rendement du procédé est également identique avec le procédé selon l'art antérieur et ceux selon l'invention
- Les consommations en utilités chaudes sont réduites dans les 2 variantes selon l'invention
   a. Dans la variante de la figure 1 les utilités chaudes sont réduites de 12,8 MW. La contrepartie est une augmentation du niveau thermique à laquelle est requise une partie de ces utilités, mais qui ne concerne que 2,76MW.
   b. Dans la variante de la figure 2 les utilités chaudes sont réduites de 17,1 MW. La contrepartie est une consommation électrique additionnelle limitée à 2,86MW.
- Dans les 2 variantes à qualité produit et rendement identique on constate une forte diminution des consommations en utilité chaudes et donc des coûts opératoires associés: Dans la variante 1 selon l'invention (figure 2), malgré l'augmentation du niveau thermique d'utilité requise au rebouilleur (faible au regard des gains d'utilités chaudes obtenus) le gain en coût opératoire est de 3 M$/an
- Dans la variante 2 selon l'invention (figure 3), malgré la consommation électrique requise pour le compresseur (faible au regard des gains d'utilités chaudes obtenus), le gain en coût opératoire est de 3,2 M$/an

Au regard des émissions de CO2 les variantes 2 et 3, permettent des réductions de l'ordre de 35 %.

## Revendications

1. Procédé de production de coupe essence à haut indice d'octane à partir d'une charge naphta léger comportant la suite d'étapes suivantes :
a) une première étape de séparation par distillation effectuée dans un dé-isopentaniseur [2] qui permet de séparer des hydrocarbures à 5 atomes de carbone des composés plus lourds (soit iC5 soit iC5+nC5 selon les cas),
b) une section d'isomérisation catalytique [1] des effluents lourds (102) issus de la première étape de séparation, suivie d'une stabilisation [7] de l'effluent isomérisé (103) qui consiste à séparer les composés plus légers que les pentanes,
c) une deuxième étape de séparation par distillation réalisée au moyen d'un dé-isohexaniseur [12] consistant en une colonne de séparation dont les produits de tête (106) et de fond (107) sont les produits recherchés du procédé, et dont une coupe intermédiaire enrichie en n-hexane, prélevée en soutirage latéral (108) est recyclée à la section d'isomérisation catalytique [1],
d) une étape de transfert de chaleur entre les 2 étapes de séparation à savoir le condenseur du dé-isohexaniseur [12] et le rebouilleur du dé-isopentaniseur [2] réalisée au moyen d'un échangeur [13] permettant de condenser tout ou partie des vapeurs de tête du dé-isohexaniseur [12] en rebouillant, tout ou partie du fond de la colonne du dé-isopentaniseur [2], et en utilisant pour ce faire un moyen qui dépend du niveau de pression opératoire du dé-isohexaniseur [12], procédé dans lequel le transfert thermique de l'étape d) est réalisé selon deux modalités:
- soit en augmentant la pression opératoire du dé-isohexaniseur [12], ce qui a pour conséquence la mise en place d'un rebouilleur latéral [19] qui apporte la majorité des calories à un niveau de température sensiblement proche de celui du rebouilleur de fond de la dite colonne [12] lorsque sa pression opératoire est choisie au niveau le plus bas permis par les utilités froides disponibles,
- soit en maintenant la pression opératoire du dé-isohexaniseur [12] au niveau le plus bas permis par les utilités froides disponibles, voire au-dessous de ce niveau, ce qui amène à comprimer les vapeurs de tête du dé-isohexaniseur [12] dans un compresseur [18] de manière à se retrouver dans des conditions de pression et température dans l'échangeur [13] qui permettent d'assurer le besoin thermique du rebouilleur du dé-isopentaniseur [2] avec une bonne efficacité.

2. Procédé selon la revendication 1, dans lequel la pression opératoire du dé-isohexaniseur [12], est comprise entre 4 et 20 bars absolus, de préférence entre 5 et 13 bar absolus, et de manière plus préférée entre 7 et 10 bar absolus, de façon à permettre l'échange thermique avec le rebouilleur du dé-isopentaniseur [2] opéré à une température comprise entre 80°C et 100°C, de préférence entre 85°C et 95°C.

3. Procédé selon la revendication 2, dans lequel un rebouilleur latéral [19] est implanté en aval du rebouilleur de fond [16] du dé-isohexaniseur [12], la quantité de chaleur apportée par le rebouilleur latéral étant au moins 50% de la quantité totale de chaleur requise.

4. Procédé selon la revendication 2, dans lequel le rebouilleur latéral [19] est implémenté sur le dé-isohexaniseur [12] en étant situé entre 10 et 15 plateaux au-dessus du rebouilleur [16], de façon à maintenir la température opératoire de ce rebouilleur latéral [19] inférieure à 180°C, et de préférence inférieure à 160°C.

5. Procédé selon la revendication 1, dans lequel la pression opératoire du dé-isohexaniseur [12] est inférieure ou égale à 3 bars absolus, de préférence inférieure à 2 bars absolus, de façon à permettre l'échange thermique avec le rebouilleur du dé-isopentaniseur [2] opéré à une température comprise entre 80°C et 100°C, de préférence entre 85°C et 95°C.

6. Procédé selon la revendication 5, dans lequel le circuit des vapeurs de tête du dé-isohexaniseur [12] est le suivant :
- les vapeurs de tête du dé-isohexaniseur [12] collectées par la conduite (112) sont comprimées par le compresseur [18], à une pression choisie de façon à pouvoir condenser ces vapeurs de tête dans l'échangeur [13] du dé-isopentaniseur [2],
- lesdites vapeurs comprimées sont amenées par la conduite (114) dans la calandre de l'échangeur [13] où elles se condensent par échange thermique avec le liquide froid (110) provenant du fond du dé-isopentaniseur [2] par la conduite (110),
- le liquide sous pression résultant de la condensation réalisée à l'échangeur [13] est envoyé par la conduite (115) au ballon de reflux [14] opéré à la pression du dé-isohexaniseur [12].

7. Procédé selon la revendication 5, dans lequel les vapeurs de tête du dé-isohexaniseur [12] collectées par la conduite (112) sont surchauffées dans l'échangeur [17] au contact du reflux chaud (117) provenant du ballon de reflux [14], le compresseur [18] étant de type centrifuge, et lesdites vapeurs comprimées étant amenées par la conduite (114) dans la calandre de l'échangeur [13] où elles se condensent au contact des tubes verticaux à l'intérieur desquels circule le liquide froid (110).

8. Procédé selon la revendication 5, dans lequel une faible fraction du liquide sous pression (115) résultant de la condensation réalisée à l'échangeur [13], se vaporise par détente dans le ballon de reflux [14], les vapeurs issues du ballon de reflux [14] étant renvoyées par la conduite (116) à l'aspiration du compresseur [18], et le liquide du ballon de reflux [14] étant pompé par la pompe de reflux [15] et divisé en un distillat évacué par la conduite (106), et un reflux renvoyé vers le dé-isohexaniseur [12] par la conduite (117) après refroidissement dans l'échangeur [17].

## Patentansprüche

1. Verfahren zur Herstellung einer Benzinfraktion mit hoher Oktanzahl aus einem leichten Naphtha-Einsatzmaterial, das folgende Schritte umfasst:
a) einen ersten Trennschritt mittels Destillation in einem Deisopentanisator [2], mit dem sich Kohlenwasserstoffe mit 5 Kohlenstoffatomen aus schwereren Verbindungen abtrennen lassen (entweder iC5 oder iC5+nC5, je nach Fall),
b) einen Abschnitt zur katalytischen Isomerisierung [1] von schwerer ablaufender Flüssigkeit (102) aus dem ersten Trennschritt, gefolgt von einer Stabilisierung [7] der isomerisierten ablaufenden Flüssigkeit (103), die im Abtrennen von leichteren Verbindungen wie Pentanen besteht,
c) einen zweiten Trennschritt mittels Destillation, der mit einem Deisohexanisator [12] vorgenommen wird, der aus einer Trennkolonne besteht, deren Kopfprodukte (106) und Bodenprodukte (107) die angestrebten Produkte des Verfahrens sind, und bei dem eine Zwischenfraktion mit einem hohen Gehalt an n-Hexan, die als Seitenstrom abgezogen wird (108), wieder zum Abschnitt zur katalytischen Isomerisierung [1] zurückgeführt wird,
d) einen Schritt zur Wärmeübertragung zwischen den zwei Trennschritten, das heißt dem Kondensator des Deisohexanisators [12] und dem Rückverdampfer des Deisopentanisators [2], der mit einem Austauscher [13] erfolgt, mit dem ein Teil der oder die gesamten Kopfdämpfe des Deisohexanisators [12] kondensiert werden können, indem die gesamte Bodenflüssigkeit der Kolonne des Deisopentanisators [2] oder ein Teil davon rückverdampft wird, und wobei dafür ein Mittel eingesetzt wird, das von der Höhe des Betriebsdrucks des Deisohexanisators [12] abhängt, wobei in dem Verfahren die Wärmeübertragung von Schritt d) nach zwei Möglichkeiten vorgenommen wird:
- entweder durch Erhöhen des Betriebsdrucks des Deisohexanisators [12], weshalb ein seitlicher Rückverdampfer [19] vorzusehen ist, der den Großteil der Wärme bei einem Temperaturniveau beisteuert, das im Wesentlichen nahe dem des Bodenrückverdampfers der Kolonne [12] liegt, wenn sein Betriebsdruck auf dem für die verfügbaren kalten Medien niedrigsten zulässigen Wert gewählt wird,
- oder durch Aufrechterhalten des Betriebsdrucks des Deisohexanisators [12] auf dem für die verfügbaren kalten Medien zulässigen niedrigsten Wert, sogar unter diesem Wert, wodurch die Kopfdämpfe des Deisohexanisators [12] in einem Verdichter [18] derart verdichtet werden, dass sie im Austauscher [13] unter Druck- und Temperaturbedingungen vorliegen, bei denen der Wärmebedarf des Rückverdampfers des Deisopentanisators [2] mit hoher Wirksamkeit sichergestellt werden kann.

2. Verfahren nach Anspruch 1, wobei der Betriebsdruck des Deisohexanisators [12] zwischen 4 und 20 bar Absolutdruck, vorzugsweise zwischen 5 und 13 bar Absolutdruck und bevorzugter zwischen 7 und 10 bar Absolutdruck liegt, damit der Wärmeaustausch mit dem Rückverdampfer des Deisopentanisators [2] möglich ist, der bei einer Temperatur zwischen 80°C und 100°C, vorzugsweise zwischen 85°C und 95°C betrieben wird.

3. Verfahren nach Anspruch 2, wobei ein seitlicher Rückverdampfer [19] in Strömungsrichtung hinter dem Bodenrückverdampfer [16] des Deisohexanisators [12] eingebaut ist, wobei die von dem seitlichen Rückverdampfer zugeführte Wärmemenge mindestens 50% der benötigten Gesamtwärmemenge beträgt.

4. Verfahren nach Anspruch 2, wobei der seitliche Rückverdampfer [19] am Deisohexanisator [12] zwischen 10 und 15 Böden über dem Rückverdampfer [16] vorgesehen wird, sodass die Betriebstemperatur dieses seitlichen Rückverdampfers [19] unter 180°C und vorzugsweise unter 160°C gehalten wird.

5. Verfahren nach Anspruch 1, wobei der Betriebsdruck des Deisohexanisators [12] unter oder bei 3 bar Absolutdruck, vorzugsweise unter 2 bar Absolutdruck liegt, damit der Wärmeaustausch mit dem Rückverdampfer des Deisopentanisators [2] möglich ist, der bei einer Temperatur zwischen 80°C und 100°C, vorzugsweise zwischen 85°C und 95°C betrieben wird.

6. Verfahren nach dem Anspruch 5, wobei der Kreislauf der Kopfdämpfe des Deisohexanisators [12] folgendermaßen aussieht:
- die Kopfdämpfe des Deisohexanisators [12], die in der Leitung (112) gesammelt werden, werden von dem Verdichter [18] bei einem Druck verdichtet, der derart gewählt ist, dass diese Kopfdämpfe im Austauscher [13] des Deisopentanisators [2] kondensiert werden können,
- die verdichteten Dämpfe werden in der Leitung (114) in den Mantel des Austauschers [13] geleitet, wo sie durch Wärmeaustausch mit der kalten Flüssigkeit (110) kondensieren, die über die Leitung (110) vom Boden des Deisopentanisators [2] kommt,
- die unter Druck stehende Flüssigkeit, die von der im Austauscher [13] erfolgten Kondensation herrührt, wird in der Leitung (115) zum Rücklaufgefäß [14] geführt, das bei dem Druck des Deisohexanisators [12] betrieben wird.

7. Verfahren nach Anspruch 5, wobei die Kopfdämpfe des Deisohexanisators [12], die in der Leitung (112) gesammelt werden, im Austauscher [17] beim Kontakt mit dem heißen zurücklaufenden Strom (117) überhitzt werden, der aus dem Rücklaufgefäß [14] kommt, wobei es sich bei dem Verdichter [18] um einen Radialverdichter handelt, und die verdichteten Dämpfe in der Leitung (114) in den Mantel des Austauschers [13] geleitet werden, wo sie beim Kontakt mit den senkrechten Röhren kondensieren, in denen die kalte Flüssigkeit (110) zirkuliert.

8. Verfahren nach Anspruch 5, wobei ein geringer Anteil der unter Druck stehenden Flüssigkeit (115), die von der im Austauscher [13] vorgenommenen Kondensation herrührt, in dem Rücklaufgefäß [14] durch Entspannungsverdampfung verdampft, wobei die Dämpfe aus dem Rücklaufgefäß [14] in der Leitung (116) zum Eintritt des Verdichters [18] zurückgeführt werden, und die Flüssigkeit im Rücklaufgefäß [14] mit der Rücklaufpumpe [15] abgepumpt und in ein Destillat, das in der Leitung (106) abgeleitet wird, und eine zurücklaufende Flüssigkeit aufgeteilt wird, die in der Leitung (117) nach Abkühlung im Austauscher [17] zurück zum Deisohexanisator [12] geleitet wird.

## Claims

1. A process for the production of a high octane number gasoline cut starting from a light naphtha feed, comprising the following series of steps:
a) a first step for separation by distillation carried out in a deisopentanizer [2], which can be used to separate hydrocarbons containing 5 carbon atoms from heavier compounds (i.e. iC5 or iC5+nC5, depending on the case),
b) a section [1] for catalytic isomerization of the heavy effluents (102) obtained from the first separation step, followed by a stabilization [7] of the isomerized effluent (103), which consists of separating out the compounds which are lighter than the pentanes,
c) a second step for separation by distillation of the effluents from the isomerization reaction section, carried out using a deisohexanizer [12] consisting of a separation column in which the overhead products (106) and the bottom products (107) are the desired products from the process, and in which an intermediate cut which is enriched in n-hexane, removed as a side stream (108), is recycled to the catalytic isomerization section [1],
d) a step for transferring heat between the two separation steps, namely the condenser of the deisohexanizer [12] and the reboiler of the deisopentanizer [2], carried out using an exchanger [13] in order to condense all or a portion of the overhead vapours from the deisohexanizer [12] by reboiling all or a portion of the bottom of the deisopentanizer column [2] and using for this purpose a means which depends on the operating pressure of the deisohexanizer [12], process wherein transferring heat of step d) is performed according to two modes:
- either by increasing the operating pressure of the deisohexanizer [12], which has the consequence of having to install a lateral reboiler [19] which supplies the majority of the heat at a temperature which is substantially close to that of the bottom reboiler for said column [12] when its operating pressure is selected so as to be the lowest possible permitted by the available cold utilities,
- or by maintaining the operating pressure of the deisohexanizer [12] at a level which is the lowest permitted by the available cold utilities, or even below this level, which causes the overhead vapours from the deisohexanizer [12] to be compressed in a compressor [18] in a manner such as to instigate the pressure and temperature conditions in the exchanger [13] which can be used to provide the thermal requirements for the reboiler of the deisopentanizer [2] with good efficiency.

2. The process as claimed in claim 1, in which the operating pressure of the deisohexanizer [12] is in the range 4 to 20 bar absolute, preferably in the range 5 to 13 bar absolute, and more preferably in the range 7 to 10 bar absolute, in order to allow the exchange of heat with the reboiler of the deisopentanizer [2] which is operated at a temperature in the range 80°C to 100°C, preferably in the range 85°C to 95°C.

3. The process as claimed in claim 2, in which a lateral reboiler [19] is installed downstream of the bottom reboiler [16] of the deisohexanizer [12], the quantity of heat provided by the lateral reboiler being at least 50% of the total quantity of heat required.

4. The process as claimed in claim 2, in which lateral reboiler [19] is installed on the deisohexanizer [12], it being situated between 10 and 15 plates above the reboiler [16], in a manner such as to maintain the operating temperature of this lateral reboiler [19] to below 180°C, preferably to below 160°C.

5. The process as claimed in claim 1, in which the operating pressure of the deisohexanizer [12] is less than or equal to 3 bar absolute, preferably less than 2 bar absolute, in order to allow the exchange of heat with the reboiler of the deisopentanizer [2] operated at a temperature in the range 80°C to 100°C, preferably in the range 85°C to 95°C.

6. The process as claimed in claim 5, in which the circuit for the overhead vapours from the deisohexanizer [12] is as follows:
- The overhead vapours from the deisohexanizer [12] collected via the conduit (112) are compressed by the compressor [18] to a pressure which is selected in a manner such as to be able to condense said overhead vapours in the exchanger [13] of the deisopentanizer [2],
- said compressed vapours are supplied via the conduit (114) to the shell of the exchanger [13] where they are condensed by heat exchange with the cold liquid (110) originating from the bottom of the deisopentanizer [2] via the conduit (110),
- the liquid under pressure (115) resulting from the condensation carried out in the exchanger [13] is sent via the conduit (115) to the reflux drum [14] operated at the pressure of the deisohexanizer [12].

7. The process as claimed in claim 5, in which the overhead vapours from the deisohexanizer [12] collected via the conduit (112) are superheated in the exchanger [17] in contact with hot reflux (117) originating from the reflux drum [14], the compressor [18] being of the centrifuge type, and said compressed vapours being supplied via the conduit (114) to the shell of the exchanger [13] where they are condensed in contact with vertical tubes inside which the cold liquid (110) is moving.

8. The process as claimed in claim 5, in which a small fraction of the liquid under pressure (115) resulting from condensation carried out in the exchanger [13] is vaporized by depressurization in the reflux drum [14], the vapours obtained from the reflux drum [14] being returned via the conduit (116) to the intake of the compressor [18] and the liquid from the reflux drum [14] being pumped via the reflux pump [15] and divided into a distillate evacuated via the conduit (106) and a reflux sent to the deisohexanizer [12] via the conduit (117) after cooling in the exchanger [17].
